# EUROPEAN PATENT APPLICATION

(11) **EP 4 489 213 A2**
(43) Date of publication of application: **08.01.2025**
(21) Application number: 24184261.6
(22) Date of filing: 25.06.2024
(51) Int. Cl.: H01M 50/553, H01M 50/562, H01M 50/567

(54) **TERMINAL FOR ELECTRICITY STORAGE DEVICE AND ELECTRICITY STORAGE DEVICE**

(30) Priority: 07.07.2023 JP 2023112285
(71) Applicant: Prime Planet Energy & Solutions, Inc., Chuo-ku Tokyo 103-0022 (JP)
(72) Inventor: YAMADA, Kohei, Tokyo, 103-0022 (JP); WAKIMOTO, Ryoichi, Tokyo, 103-0022 (JP)
(74) Representative: Kuhnen & Wacker Patent- und Rechtsanwaltsbüro PartG mbB

(57) **Abstract**

A terminal includes a first conductive member and a second conductive member. The first conductive member includes a first recessed portion. The second conductive member includes a flange portion and a shaft portion. At least a portion of the flange portion is arranged in the first recessed portion. The first conductive member includes a metal joining portion metallically joined to the flange portion. The flange portion includes a large diameter portion and a small diameter portion. An outer diameter of the small diameter portion is equal to or less than 9/10 of an outer diameter of the large diameter portion. An outer peripheral side surface of the small diameter portion includes a fastening portion mechanically fastened to an inner surface of the first recessed portion.

## Description

The present disclosure relates to a terminal for an electricity storage device and an electricity storage device

### BACKGROUND

In Japanese Laid-open Patent Publication No. 2022-049726, a terminal including a first member that is formed of metal and has a plate-like shape and a second member that is formed of metal and is ultrasonically welded to one surface of the first member is disclosed. In the first member, a recessed portion is formed in a surface at an opposite side to the surface to which the second member is welded. In the recessed portion, the first member and the second member are ultrasonically welded to each other.

### SUMMARY

The inventors of the present disclosure desire to increase reliability of a coupling portion between members in a terminal for an electricity storage device in which multiple members are coupled.

A terminal for an electricity storage device disclosed herein includes a first conductive member formed of a first metal, and a second conductive member formed of a second metal that is different from the first metal. The first conductive member includes a first recessed portion in a first surface. The second conductive member includes a flange portion and a shaft portion provided in one surface of the flange portion. At least a portion of the flange portion is arranged in the first recessed portion. The first conductive member includes a metal joining portion metallically joined to the flange portion. The flange portion includes a large diameter portion and a small diameter portion. An outer diameter of the small diameter portion is equal to or less than 9/10 of an outer diameter of the large diameter portion. The small diameter portion is located at a side more distant from the shaft portion than the large diameter portion. The outer peripheral side surface of the small diameter portion includes a fastening portion mechanically fastened to an inner surface of the first recessed portion. The upper surface of the large diameter portion contacts the first conductive member.

According to the terminal for an electricity storage device described above, a coupling portion between the first conductive member and the second conductive member has high reliability.

### BRIEF DESCRIPTION OF THE DRAWINGS

FIG. 1 is a perspective view of an electricity storage device.
FIG. 2 is a schematic longitudinal sectional view taken along line II-II of FIG. 1.
FIG. 3 is a cross-sectional view illustrating a negative electrode terminal mounted on a sealing plate.
FIG. 4 is a perspective view illustrating a battery pack.
FIG. 5 is a schematic view of an external conductive member.
FIG. 6 is a cross-sectional view of a negative electrode terminal.
FIG. 7 is a perspective view of a second conductive member.
FIG. 8 is a schematic view illustrating a protrusion.
FIG. 9 is a schematic view of a protrusion according to another embodiment.
FIG. 10 is a cross-sectional view of a negative electrode terminal according to another embodiment.
FIG. 11 is a cross-sectional view of a negative electrode terminal according to another embodiment.
FIG. 12 is a cross-sectional view of a negative electrode terminal according to another embodiment.
FIG. 13 is a cross-sectional view of a negative electrode terminal according to another embodiment.
FIG. 14 is a cross-sectional view of a negative electrode terminal according to another embodiment.

### DETAILED DESCRIPTION OF THE EMBODIMENTS

Embodiments of a technology disclosed herein will be described below with reference to the accompanying drawings. As a matter of course, the embodiments described herein are not intended to be particularly limiting the present disclosure. The accompanying drawings are schematic and do not necessarily reflect actual members or portions. Members/portions that have the same effect will be denoted by the same sign as appropriate, and the overlapping description will be omitted as appropriate.

In the following description, reference signs "L," "R," "F," "Rr," "U," and "D" in the drawings respectively denote "left," "right," "front," "rear," "up," and "down," and reference signs "X," Y," and "Z" in the drawings respectively denote "a long side direction," "a short side direction," and "a height direction" of an electricity storage device. However, these directions are defined for convenience of explanation, and do not limit an installation form of the electricity storage device.

Note that, in the present specification, the term "electricity storage device" generally refers to electricity storage devices from which electric energy can be taken out. The term "electricity storage device" encompasses, as well as secondary batteries that can be repeatedly charged and discharged by moving of a charge carrier between a pair of electrodes (a positive electrode and a negative electrode) via an electrolyte, capacitors, such as an electric double layer capacitor or the like, or the like. For a method for manufacturing an electricity storage device, an embodiment in a case where a lithium-ion secondary battery is a target will be described below.

### <Electricity Storage Device 100>

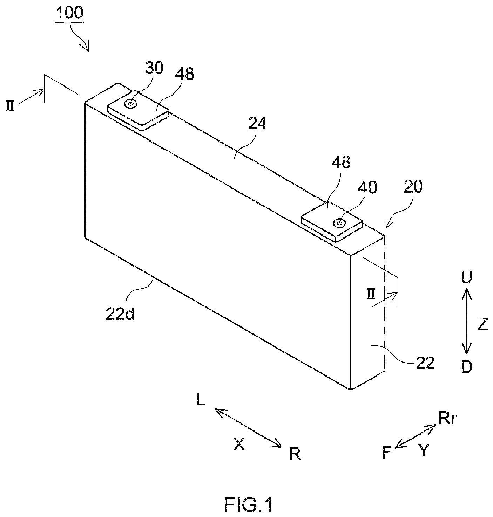

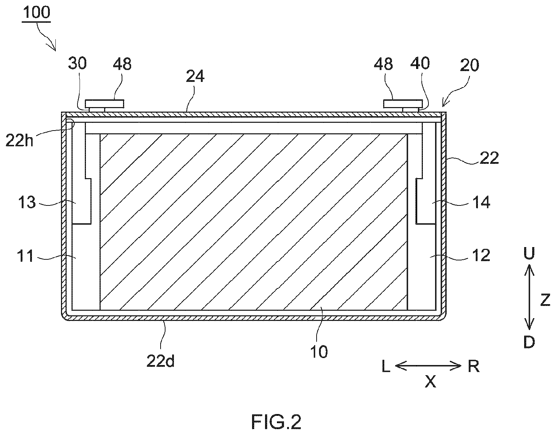

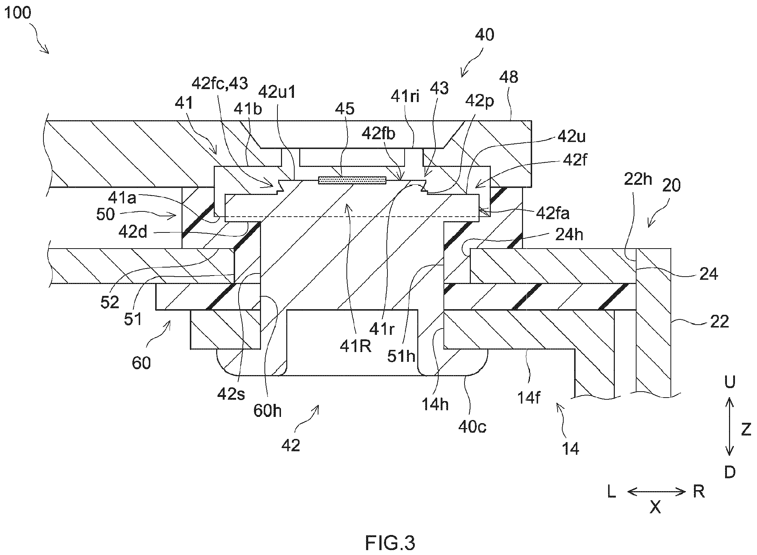

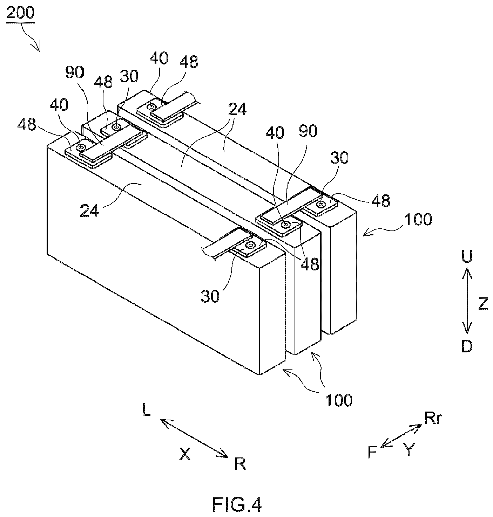

FIG. 1 is a perspective view of an electricity storage device 100. FIG. 2 is a schematic longitudinal sectional view taken along line II-II of FIG. 1. In FIG. 2, illustration of a gasket 50 and an insulator 60 is omitted. FIG. 3 is a cross-sectional view illustrating a negative electrode terminal 40 mounted on a sealing plate 24. FIG. 4 is a perspective view illustrating a battery pack 200. In FIG. 4, with the electricity storage device 100 disclosed herein assumed as a single battery, a form in which electricity storage devices 100 are coupled in series via bus bars 90 is illustrated.

As illustrated in FIG. 2, the electricity storage device 100 includes an electrode body 10, a case 20, a positive electrode terminal 30, and a negative electrode terminal 40. The electricity storage device 100 may include an external conductive member 48. The electricity storage device 100 is characterized by including the positive electrode terminal 30 and/or the negative electrode terminal 40 disclosed herein, and other components than that may be similar to those of a known device. The electricity storage device 100 is preferably a second battery, and is more preferably a nonaqueous electrolyte secondary battery. The electricity storage device 100 is preferably a rectangular secondary battery. The electricity storage device 100 is herein a lithium-ion secondary battery. Although not illustrated, the electricity storage device 100 further includes an electrolyte herein. The electricity storage device 100 is configured such that the electrode body 10 and the unillustrated electrolyte are accommodated in the case 20.

The electrode body 10 may be similar to a known electrode body, and there is no particular limitation thereon. The electrode body 10 includes a positive electrode and a negative electrode (not illustrated). The electrode body 10 is, for example, a flat wound electrode body obtained by stacking a band-like positive electrode and a band-like negative electrode with a band-like separator interposed therebetween such that the positive electrode and the negative electrode are insulated from each other and winding an obtained stacked body with a winding axis as a center. However, in another embodiment, the electrode body 10 may be a stacked electrode body in which a quadrangular (typically rectangular) positive electrode and a quadrangular (typically rectangular) negative electrode are stacked so as to be insulated from each other.

The positive electrode includes a positive electrode current collector 11 and a positive electrode mixture layer (not illustrated) fixed on the positive electrode current collector 11. The positive electrode current collector 11 is formed of a conductive metal, such as, for example, aluminum, an aluminum alloy, nickel, stainless steel, or the like. The positive electrode mixture layer includes a positive electrode active material (for example, lithium-transition metal compound oxide). The negative electrode includes a negative electrode current collector 12 and a negative electrode mixture layer (not illustrated) fixed on the negative electrode current collector 12. The negative electrode current collector is formed of a conductive metal, such as, for example, copper, a copper alloy, nickel, stainless steel, or the like. The negative electrode mixture layer includes a negative electrode active material (for example, a carbon material, such as graphite or the like).

As indicated by hatched lines in FIG. 2, a stacking portion where the positive electrode mixture layer and the negative electrode mixture layer are stacked so as to be insulated from each other is formed in a central portion of the electrode body 10 in a long side direction X. On the other hand, a portion (positive electrode current collector exposed portion) of the positive electrode current collector 11 where the positive electrode mixture layer is not formed protrudes from the stacking portion in a left end portion of the electrode body 10 in the long side direction X. The positive electrode current collecting member 13 is attached to the positive electrode current collector exposed portion. The positive electrode current collecting member 13 may be formed of the same metal material as that of the positive electrode current collector 11, that is, a conductive metal, such as, for example, aluminum, an aluminum alloy, nickel, stainless steel, or the like. The positive electrode current collecting member 13 is arranged in the case 20. The positive electrode current collecting member 13 electrically couples the positive electrode and the positive electrode terminal 30.

A portion (negative electrode current collector exposed portion) of the negative electrode current collector 12 where the negative electrode mixture layer is not formed protrudes from the stacking portion in a right end portion of the electrode body 10 in the long side direction X. The negative electrode current collecting member 14 is attached to the negative electrode current collector exposed portion. A material (type of metal) of the negative electrode current collecting member 14 may be different from that of the positive electrode current collecting member 13. The negative electrode current collecting member 14 may be formed of the same type of metal as that of the negative electrode current collector 12, that is, a conductive metal, such as, for example, copper, a copper alloy, nickel, stainless steel, or the like. The negative electrode current collecting member 14 is arranged in the case 20. The negative electrode current collecting member 14 electrically couples the negative electrode and the negative electrode terminal 40. The negative electrode current collecting member 14 electrically couples the negative electrode and the negative electrode terminal 40 in the case 20.

The electrolyte may be similar to an electrolyte conventionally used, and there is no particular limitation thereon. The electrolyte is, for example, a nonaqueous liquid electrolyte (nonaqueous electrolyte solution) containing a nonaqueous solvent and a supporting salt. Examples of the nonaqueous solvent include carbonates, such as, for example, ethylene carbonate, dimethyl carbonate, ethyl methyl carbonate, or the like. The supporting salt is, for example, a fluorine-containing lithium salt, such as LiPF₆ or the like. However, the electrolyte may be in a solid form (solid electrolyte) and may be integrated with the electrode body 10.

The case 20 is a housing that accommodates the electrode body 10. The case 20 is formed in a flat and bottomed rectangular parallelopiped (rectangular) shape. However, a shape of the case 20 is not limited to a rectangular shape and may be an arbitrary shape, such as a cylindrical shape or the like. A material of the case 20 may be the same as a material conventionally used, but not limited to. The case 20 is formed of a metal material, such as, for example, aluminum, an aluminum alloy, stainless steel, or the like, having a light weight and an excellent heat conductivity. The case 20 includes an exterior body 22 including an opening 22h and a sealing plate 24 that closes the opening 22h. The case 20 preferably includes the exterior body 22 and the sealing plate 24. The case 20 is formed such that the exterior body 22 and the sealing plate 24 are integrated by joining (for example, welding joining) the sealing plate 24 to a peripheral edge of the opening 22h of the exterior body 22. The case 20 is airtightly sealed (hemetically sealed).

The exterior body 22 includes a bottom surface 22d. The sealing plate 24 is opposed to the bottom surface 22d of the exterior body 22. The sealing plate 24 is mounted on the exterior body 22 so as to close the opening 22h of the exterior body 22. The sealing plate 24 has an approximately rectangular shape herein. Note that, as used in the present specification, the term "approximately rectangular" encompasses, in addition to a complete rectangular shape (rectangle), for example, a shape in which corners that connect long sides and short sides of rectangular surfaces are rounded, a shape in which corner portions have notches, or the like.

The positive electrode terminal 30 and the negative electrode terminal 40 protrude outward from the case 20. The positive electrode terminal 30 and the negative electrode terminal 40 protrude from the same surface of the case 20 (specifically, the sealing plate 24) herein. However, the positive electrode terminal 30 and the negative electrode terminal 40 may be configured to protrude from different surfaces of the case 20. Each of the positive electrode terminal 30 and the negative electrode terminal 40 is arranged in a corresponding one of both end portions of the sealing plate 24 in the long side direction X. The positive electrode terminal 30 and/or the negative electrode terminal 40 is one example of "a terminal for an electricity storage device."

As illustrated in FIG. 2, the positive electrode terminal 30 is electrically coupled to the positive electrode of the electrode body 10 via the positive electrode current collecting member 13 in the case 20. The negative electrode terminal 40 is electrically coupled to the negative electrode of the electrode body 10 via the negative electrode current collecting member 14 in the case 20. Each of the positive electrode terminal 30 and the negative electrode terminal 40 is mounted to the case 20 (specifically, the sealing plate 24). The positive electrode terminal 30 and the negative electrode terminal 40 are preferably fixed to the case 20 (specifically, the sealing plate 24). Each of the positive electrode terminal 30 and the negative electrode terminal 40 is insulated from the sealing plate 24 via a corresponding one of the gasket 50 (see FIG. 3) and the insulator 60 (see FIG. 3).

Configurations of the positive electrode terminal 30 and the negative electrode terminal 40 of the electricity storage device 100 will be described in detail below using a terminal structure at a negative electrode terminal 40 side as an example. The terminal structure described below is preferably provided at the negative electrode terminal 40 side. Note that the terminal structure described below may be provided at a positive electrode terminal 30 side, and may be provided at each of both of the positive electrode terminal 30 side and the negative electrode terminal 40 side. In that case, in the following description, the "negative electrode" may be read as the "positive electrode," as appropriate.

As illustrated in FIG. 3, a terminal mounting hole 24h is formed in the sealing plate 24 so as to pass through in an up-down direction Z. The terminal mounting hole 24h is provided in the case 20 (in this embodiment, the sealing plate 24). The negative electrode terminal 40 is preferably inserted in the terminal mounting hole 24h. Although not illustrated, the terminal mounting hole 24h has a circular shape (for example, a complete circular shape) when viewed from top herein. The terminal mounting hole 24h has an inner diameter that is large enough to allow insertion of a caulking portion 40c of the negative electrode terminal 40 before caulking, which will be described later, therethrough. The terminal mounting hole 24h is formed to be smaller than a flange portion 42f of the negative electrode terminal 40, which will be described later.

The negative electrode current collecting member 14 is attached to the negative electrode current collector exposed portion of the negative electrode current collector 12 and forms a conduction path that electrically couples the negative electrode and the negative electrode terminal 40. The negative electrode current collecting member 14 includes a flat plate-like portion 14f that horizontally extends along an inner surface of the sealing plate 24. In the flat plate-like portion 14f, an opening 14h is provided in a position corresponding to the terminal mounting hole 24h. The opening 14h has an inner diameter that is large enough to allow insertion of the caulking portion 40c of the negative electrode terminal 40 before the caulking, which will be described later, therethrough. The negative electrode current collecting member 14 is fixed to the sealing plate 24 with the negative electrode terminal 40 by caulking. A resin insulating member is preferably arranged between the case 20 (in this embodiment, sealing plate 24) and the negative electrode current collecting member 14. In this embodiment, the negative electrode current collecting member 14 is fixed to the sealing plate 24 with the negative electrode terminal 40 so as to be insulated from the sealing plate 24 via the insulator 60.

The gasket 50 is an insulating member arranged between an upper surface (outer surface) of the sealing plate 24 and the negative electrode terminal 40. An insulating member (for example, the gasket 50) is preferably arranged between the case 20 (for example, the sealing plate 24) and the negative electrode terminal 40. The gasket 50 has a function of insulating the sealing plate 24 and the negative electrode terminal 40 from each other and closing the terminal mounting hole 24h. The gasket 50 is formed of a resin material that has an electrical insulation property and is elastically deformable, that is, for example, fluororesin, such as perfluoroalkoxy fluororesin (PFA) or the like, polyphenylene sulfide resin (PPS), aliphatic polyamide, or the like.

The gasket 50 includes a cylindrical portion 51 and a base 52. The cylindrical portion 51 prevents direct contact of the sealing plate 24 with the caulking portion 40c of the negative electrode terminal 40. The cylindrical portion 51 has a hallow cylindrical shape. The cylindrical portion 51 includes a hole portion 51h that passes through in the up-down direction Z. The hole portion 51h is formed such that the caulking portion 40c of the negative electrode terminal 40 before caulking can be inserted therethrough. The cylindrical portion 51 is inserted through the terminal mounting hole 24h of the sealing plate 24. The base 52 prevents direct contact of the sealing plate 24 with the flange portion 42f of the negative electrode terminal 40, which will be described later. The base 52 is connected to an upper end of the cylindrical portion 51. The base 52 horizontally extends from the upper end of the cylindrical portion 51. The base 52 is formed, for example, in an annular shape so as to surround the terminal mounting hole 24h of the sealing plate 24. The base 52 extends along the upper surface of the sealing plate 24. The base 52 is sandwiched between a lower surface 42d of the flange portion 42f of the negative electrode terminal 40 and the upper surface of the sealing plate 24 and is compressed in the up-down direction Z by caulking.

The insulator 60 is an insulating member arranged between a lower surface (inner surface) of the sealing plate 24 and the negative electrode current collecting member 14. An insulating member (for example, the insulator 60) is preferably arranged between the case 20 (for example, the sealing plate 24) and the negative electrode current collecting member 14. The insulator 60 includes a flat plate-like portion that horizontally extends along the inner surface of the sealing plate 24. A hole portion 60h is formed in a position corresponding to the terminal mounting hole 24h in the flat plate-like portion. The hole portion 60h has an inner diameter that is large enough to allow insertion of a shaft portion 42s of the negative electrode terminal 40 therethrough. The insulator 60 is formed of a resin material that has resistance against an electrolyte that is used, has an electrical insulation property, and is elastically deformable, that is, for example, fluororesin, such as perfluoroalkoxy fluororesin (PFA) or the like, polyphenylene sulfide resin (PPS), or the like. The flat plate-like portion of the insulator 60 is sandwiched between the lower surface of the sealing plate 24 and the upper surface of the negative electrode current collecting member 14 and is compressed in the up-down direction Z by caulking.

### <Negative Electrode Terminal 40>

The negative electrode terminal 40 includes a first conductive member 41 and a second conductive member 42. As illustrated in FIG. 3, the negative electrode terminal 40 is inserted through the terminal mounting hole 24h and extends from inside of the case 20 to outside. The negative electrode terminal 40 may further include the external conductive member 48 coupled to the first conductive member 41 outside the case 20.

The negative electrode terminal 40 is configured such that two types of conductive members, that is, the first conductive member 41 and the second conductive member 42, are electrically coupled to each other via a metal joining portion 45.

The negative electrode terminal 40 is inserted in the terminal mounting hole 24h of the sealing plate 24 and the opening 14h of the negative electrode current collecting member 14 and has a distal end portion in an insertion direction caulked on the negative electrode current collecting member 14. Specifically, the distal end portion is caulked on a peripheral edge portion of the negative electrode current collecting member 14 around the opening 14h. The caulking portion 40c is formed in a lower end portion of the negative electrode terminal 40. The negative electrode terminal 40 is fixed to the sealing plate 24 by caulking and is electrically coupled to the negative electrode current collecting member 14. The caulking portion 40c has a cylindrical shape herein. However, a shape of the caulking portion 40c is not limited to a cylindrical shape, and may be an arbitrary shape, such as a columnar shape or the like. Note that the caulking portion 40c is preferably welded to the negative electrode current collecting member 14. The first conductive member 41 and the second conductive member 42 that form the negative electrode terminal 40 will be described below.

### <First Conductive Member 41>

The first conductive member 41 is arranged outside the case 20. The first conductive member 41 is formed of a first metal. The first metal is a conductive metal, such as, for example, aluminum, an aluminum alloy, nickel, stainless steel, or the like. The first metal is preferably aluminum or an aluminum alloy. The first conductive member 41 is formed of aluminum herein. The first conductive member 41 is preferably formed of a (soft) metal having a lower Vickers' hardness than that of the second conductive member 42. The first conductive member 41 may be formed of an alloy containing, as a first component (component contained at a highest blending ratio by weight, the same applies below), the same metal or the same metal element as that of the positive electrode current collecting member 13.

The first conductive member 41 preferably has a diameter that is larger than a thickness thereof. In this embodiment, the first conductive member 41 has a plate-like shape (specifically, flat plate-like shape). The first conductive member 41 preferably has an approximately disk-like shape when viewed from top. The first conductive member 41 includes a first surface 41a and a second surface 41b. The first surface 41a is joined to the second conductive member 42.

The first conductive member 41 includes a first recessed portion 41R in the first surface 41a. The first recessed portion 41R is formed in an approximately central portion of the first surface 41a of the first conductive member 41. The first recessed portion 41R is a portion where at least a portion of the flange portion 42f is arranged. The first recessed portion 41R preferably includes a portion where a small diameter portion 42fb of the flange portion 42f that will be described later is arranged and a portion where a large diameter portion 42fa of the flange portion 42f is arranged. The first recessed portion 41R preferably includes at least a portion where the small diameter portion 42fb is arranged. In this embodiment, a portion of the large diameter portion 42fa and the small diameter portion 42fb are arranged in the first recessed portion 41R. The first recessed portion 41R has a shape corresponding to the small diameter portion 42fb and the large diameter portion 42fa. Therefore, a portion of an outer peripheral side surface of the large diameter portion 42fa contacts an inner peripheral side surface of the first recessed portion 41R of the first conductive member 41. As described above, the inner peripheral side surface of the first recessed portion 41R of the first conductive member 41 is preferably arranged outside the outer peripheral side surface of the large diameter portion 42fa of the second conductive member 42 in a radial direction.

Although there is no particular limitation on the shape of the first recessed portion 41R, in this embodiment, the first recessed portion 41R includes a first bottom surface 41R1 and a second bottom surface 41R2 having different depths. The first bottom surface 41R1 is provided at a deeper position than the second bottom surface 41R2. Herein, the first bottom surface 41R1 is provided at a deepest position in the first recessed portion 41R. In other words, the first bottom surface 41R1 is provided at a position most distant from an opening 41R3 in the first recessed portion 41R. The first bottom surface 41R1 is an approximately circular surface, and has a shape corresponding to an upper surface 42u1 of the small diameter portion 42fb of the flange portion 42f of the second conductive member 42. The second bottom surface 41R2 is provided between the first bottom surface 41R1 and the opening 41R3. The second bottom surface 41R2 is an approximately annular surface, and has a shape corresponding to the upper surface 42u of the large diameter portion 42fa of the flange portion 42f.

The first recessed portion 41R is recessed from the opening 41R3 toward the second bottom surface 41R2 in an approximately circular shape with an approximately uniform diameter. The large diameter portion 42fa has an outer diameter corresponding to an inner diameter of the first recessed portion 41R at a side closer to the opening 41R3 than the second bottom surface 41R2. In other words, the large diameter portion 42fa is an approximately disk-like member having the approximately same diameter as the inner diameter of a portion from the opening 41R3 of the first recessed portion 41R to the first bottom surface 41R1. In this embodiment, a thickness of the large diameter portion 42fa is set slightly larger than a length from the second bottom surface 41R2 to the opening 41R3. Therefore, the large diameter portion 42fa slightly protrudes downward from the first surface 41a of the first conductive member 41. A dimensional relation between the large diameter portion 42fa and the first recessed portion 41R in the height direction is not limited thereto.

In a portion of the first recessed portion 41R extending from the second bottom surface 41R2 to the first bottom surface 41R1, the first recessed portion 41R is recessed in an approximately truncated cone-like shape. The second bottom surface 41R2 inwardly projects toward the first bottom surface 41R1. Therefore, a side surface of the first recessed portion 41R is tapered from the first bottom surface 41R1 toward the second bottom surface 41R2 such that the diameter is gradually reduced. In other words, the side surface of the first recessed portion 41R is tapered such that the diameter is gradually increased from the second bottom surface 41R2 toward the first bottom surface 41R1.

The second surface 41b is a surface at an opposite side to the first surface 41a. In this embodiment, a rib 41ri having an annular shape is formed in the second surface 41b of the first conductive member 41. The rib 41ri can be continuously formed in an annular shape. The external conductive member 48 is joined to the second surface 41b by welding via the rib 41ri. The external conductive member 48 preferably extends in a longitudinal direction of the sealing plate 24. The external conductive member 48 is preferably formed of the same type of metal as that of the first conductive member 41 (in this embodiment, aluminum or an aluminum alloy).

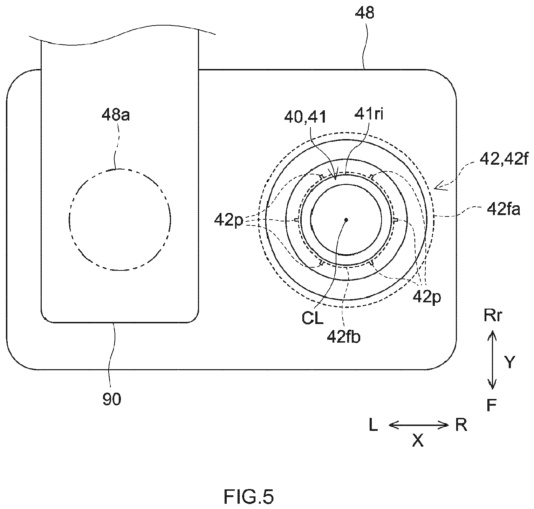

As illustrated in FIG. 4, in forming the battery pack 200, a bus bar 90 is coupled to the external conductive member 48 coupled to the first conductive member 41. FIG. 5 is a schematic view of the external conductive member 48. In FIG. 5, the external conductive member 48 and the bus bar 90 when viewed from top are schematically illustrated. In FIG. 5, the second conductive member 42 hidden behind the external conductive member 48 is indicated by a broken line. As illustrated in FIG. 5, the bus bar 90 is coupled to the external conductive member 48 in a bus bar welding portion 48a. The bus bar 90 and the external conductive member 48 can be welded, for example, by laser welding or the like. Note that the external conductive member 48 may not be necessarily mounted on the second surface 41b of the first conductive member 41. In forming the battery pack 200 (see FIG. 4), the bus bar 90 may be directly coupled to the first conductive member 41 without the external conductive member 48 provided therebetween.

### <Second Conductive Member 42>

As illustrated in FIG. 3, the second conductive member 42 is inserted through the terminal mounting hole 24h and extends from the inside of the case 20 to outside. The second conductive member 42 is formed of a second metal that is different from the first metal. The second metal is a conductive metal, such as, for example, copper, a copper alloy, nickel, stainless steel, iron, an iron alloy, or the like. The second metal is preferably formed of copper or a copper alloy. The second conductive member 42 is formed of copper herein. The second conductive member 42 is preferably formed of a (hard) metal having a higher Vickers' hardness than that of the first conductive member 41. The second metal may be formed of an alloy containing, as a first component, the same metal or the same metal element as that of the negative electrode current collecting member 14. The second conductive member 42 may be configured such that a portion or an entire portion of a surface of the second conductive member 42 is coated with some other metal by Ni plating, tin plating, or the like.

The second conductive member 42 includes the flange portion 42f and the shaft portion (coupling portion) 42s. The shaft portion 42s is coupled to the negative electrode current collecting member 14 to serve as the caulking portion 40c. The shaft portion 42s is provided on one surface (in this embodiment, the lower surface 42d) of the flange portion 42f. The shaft portion 42s is inserted through the terminal mounting hole 24h of the case 20 (in this embodiment, the sealing plate 24) and the opening 14h of the negative electrode current collecting member 14. The base 52 of the gasket 50 is arranged between the flange portion 42f and the sealing plate 24. The cylindrical portion 51 of the gasket 50 is arranged between the shaft portion 42s and the sealing plate 24. A diameter of the shaft portion 42s increases as proceeding toward a distal end thereof. A portion thereof having an increased diameter is coupled to the negative electrode current collecting member 14. The portion having an increased diameter will be also referred to as the "caulking portion 40c," and is preferably caulked and coupled to the negative electrode current collecting member 14 in a state of being inserted through the opening 14h of the negative electrode current collecting member 14. From a viewpoint of increasing conductivity, respective portions of the caulking portion 40c and the negative electrode current collecting member 14 are preferably joined to each other by laser welding or the like.

The flange portion 42f has a larger diameter than that of the shaft portion 42s in a surface direction (in an X direction and a Y direction). In other words, the flange portion 42f is a portion a diameter of which is extended to have a diameter larger than that of the shaft portion 42s in one end of the shaft portion 42s. The flange portion 42f is arranged outside the case 20. The flange portion 42f is coupled to the first conductive member 41.

There is no particular limitation on a shape of the flange portion 42f. For example, the flange portion 42f may have an approximately circular shape and may have an approximately polygonal shape when viewed from top in a direction (height direction) in which the shaft portion 42s extends. The flange portion 42f preferably has an approximately circular shape when viewed from top. The term "approximately circular shape" encompasses not only a complete circular shape but also a shape with a notch formed in a portion of an outer peripheral surface, or the like. At least a portion of an outer peripheral edge of the flange portion 42f preferably has a circular shape. For example, a shape of the outer peripheral edge around the flange portion 42f at a same height in a thickness direction of the flange portion 42f is preferably a circular shape.

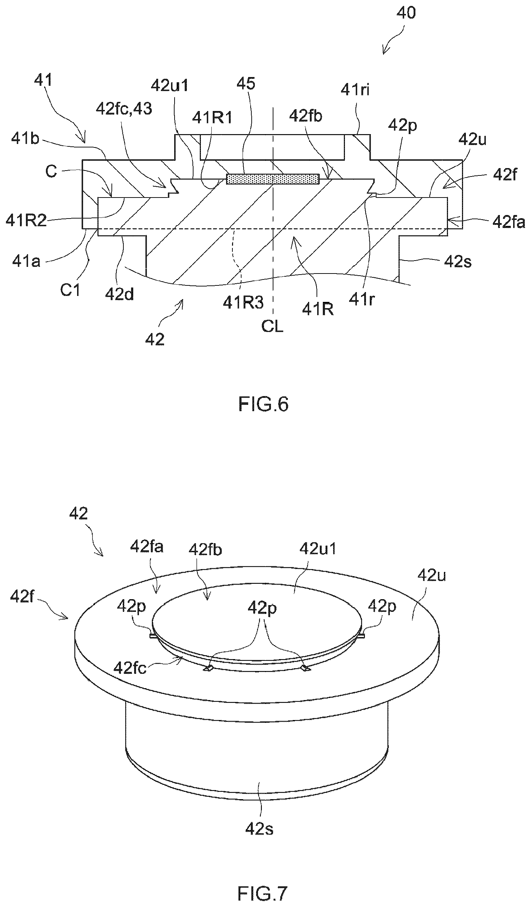

FIG. 6 is a cross-sectional view of the negative electrode terminal 40. In FIG. 6, a cross section around an interface between the first conductive member 41 and the second conductive member 42 is illustrated. In FIG. 6, illustration of the sealing plate 24, the gasket 50, the insulator 60, the negative electrode current collecting member 14, or the like is omitted.

As illustrated in FIG. 6, the flange portion 42f includes the large diameter portion 42fa and the small diameter portion 42fb. The large diameter portion 42fa has a larger diameter than that of the small diameter portion 42fb. The large diameter portion 42fa has an approximately disk-like shape with an approximately uniform diameter over an entire thickness direction (height direction). In other words, an outer peripheral edge of an upper surface 42u of the large diameter portion 42fa has a circular shape. The small diameter portion 42fb that protrudes upward is formed in an approximately central portion of the upper surface 42u of the large diameter portion 42fa. The small diameter portion 42fb is located at a side more distant from the shaft portion 42s than the large diameter portion 42fa. Each of the large diameter portion 42fa and the small diameter portion 42fb has a shape corresponding to the first recessed portion 41R. The small diameter portion 42fb has a diameter that increases as proceeding toward a distal end side (a side distant from the flange portion 42f). The diameter of the small diameter portion 42fb reduces as proceeding from a distal end toward a base end thereof. Note that the diameter of the small diameter portion 42fb may be smaller than the diameter of the shaft portion 42s.

The negative electrode terminal 40 includes a contact portion C that the first conductive member 41 and the second conductive member 42 contact. At least a portion of the flange portion 42f is arranged in the first recessed portion 41R. A portion of the flange portion 42f of the second conductive member 42 contacts the first conductive member 41 in the first recessed portion 41R. In the contact portion C, the first conductive member 41 includes the metal joining portion 45. The metal joining portion 45 is a joining portion where the first conductive member 41 and the flange portion 42f of the second conductive member 42 are joined to each other by metal joining. The metal joining portion 45 is formed in a center of an upper surface of the flange portion 42f.

As used herein, the term "metal joining" refers to joining of metal members to each other by metallurgical joining and excludes joining by mechanical fastening. The metal joining portion 45 is preferably formed by ultrasonic joining, diffusion joining, laser welding, or the like. From a viewpoint of suppressing formation of a brittle intermetallic compound at a joining interface, the metal joining portion 45 is preferably an ultrasonic joining portion formed by ultrasonic joining. In this embodiment, the metal joining portion 45 is an ultrasonic joining portion where the first conductive member 41 and the second conductive member 42 are joined to each other by ultrasonic joining.

In this embodiment, the metal joining portion 45 is formed on the upper surface 42u1 of the small diameter portion 42fb. From a viewpoint of suppressing corrosion by the electrolyte solution, water, or the like, the metal joining portion 45 is preferably formed by metallically joining the upper surface of the flange portion 42f and a bottom surface of a recessed portion of the first conductive member 41 (in this embodiment, the first bottom surface 41R1 of the first recessed portion 41R) to each other. The metal joining portion 45 is preferably formed in a central portion of the upper surface of the flange portion 42f.

The negative electrode terminal 40 includes a fastening portion 43. The fastening portion 43 refers to a portion where the first conductive member 41 and the second conductive member 42 are mechanically fastened to each other. The fastening portion 43 is formed by mechanically fastening the outer peripheral side surface of the small diameter portion 42fb and the inner surface of the first recessed portion 41R to each other. The fastening portion 43 is formed along the outer peripheral side surface of the small diameter portion 42fb.

The fastening portion 43 is realized between the small diameter portion 42fb of the flange portion 42f and the first bottom surface 41R1 and the second bottom surface 41R2 of the first recessed portion 41R. Herein, the small diameter portion 42fb of the flange portion 42f is fitted to a side peripheral surface between the first bottom surface 41R1 and the second bottom surface 41R2 that inwardly projects in the first recessed portion 41R of the first conductive member 41. In other words, the small diameter portion 42fb of the flange portion 42f is pressed in the first recessed portion 41R of the first conductive member 41 and is caulked to the side peripheral surface between the second bottom surface 41R2 and the first bottom surface 41R1.

There is no particular limitation on a form of the fastening portion 43 as long as the fastening portion 43 is mechanically fastened, for example, by mechanical energy. The fastening portion 43 can be a portion fastened, for example, by press fitting, shrink fitting, caulking, riveting, folding, bolt joining, or the like.

The upper surface 42u of the large diameter portion 42fa contacts the first conductive member 41. Herein, the upper surface 42u refers to a surface that contacts the first conductive member 41, and is a surface at an opposite side to the lower surface 42d where the shaft portion 42s extends. In this embodiment, the upper surface 42u of the large diameter portion 42fa contacts the second bottom surface 41R2 of the first recessed portion 41R of the first conductive member 41. A configuration of the large diameter portion 42fa is not limited thereto, and the upper surface 42u of the large diameter portion 42fa may contact, for example, the first surface 41a of the first conductive member 41. The surface at which the upper surface 42u of the large diameter portion 42fa and the first conductive member 41 contact each other can vary in accordance with respective shapes of the first conductive member 41 and the second conductive member 42 or the like.

Incidentally, according to a finding of the inventors of the present disclosure, in a terminal for an electricity storage device that includes a fastening portion where conductive members are mechanically fastened to each other, the fastening portion is damaged during use of the electricity storage device in some cases. For example, there is a concern that, in a case where an event where an electrolyte solution contacts a portion where a boundary between the conductive members is exposed, for example, due to vibration or the like during use of the electricity storage device, the fastening portion is damaged.

In the negative electrode terminal 40, an outer diameter of the small diameter portion 42fb is set smaller than an outer diameter of the large diameter portion 42fa. The outer diameter of the small diameter portion 42fb is smaller than the outer diameter of the large diameter portion 42fa, so that a distance between the fastening portion 43 formed on the outer peripheral side surface of the small diameter portion 42fb and a boundary portion between the first conductive member 41 and the second conductive member 42 is ensured. In the radial direction of the flange portion 42f, a length of a portion where the upper surface 42u of the large diameter portion 42fa and the first conductive member 41 contact each other is increased. According to the configuration described above, even in a case where the electrolyte solution contacts a portion where a boundary between the first conductive member 41 and the second conductive member 42 is exposed, for example, due to vibration or the like when the electricity storage device 100 is used, the electrolyte solution, water, or the like is less likely to reach the small diameter portion 42fb. As a result, reduction of reliability of the fastening portion 43 caused by corrosion of the interface between the first conductive member 41 and the second conductive member 42 in the fastening portion 43 is suppressed. According to the finding of the inventors of the present invention, in a case where the outer diameter of the small diameter portion 42fb is equal to or less than 9/10 of the outer diameter of the large diameter portion 42fa, reduction of reliability of the fastening portion 43 is effectively suppressed.

Note that each of the outer diameters of the large diameter portion 42fa and the small diameter portion 42fb is an outer shape of a portion having a largest diameter from a central axis CL therein. In this embodiment, the outer diameter of the small diameter portion 42fb refers to an outer diameter of the small diameter portion 42fb in the upper surface 42u1 at the distal end side. In this embodiment, the outer diameter of the large diameter portion 42fa is approximately uniform in an axial direction, and therefore, refers to an outer diameter in an arbitrary position in the axial direction.

For example, the outer diameter of the small diameter portion 42fb is more preferably equal to or less than 4/5 of the outer diameter of the large diameter portion 42fa and is even more preferably equal to or less than 2/3 of the outer diameter of the large diameter portion 42fa. Thus, the reliability of the fastening portion 43 is further increased. For example, a difference between the outer diameter of the large diameter portion 42fa and the outer diameter of the small diameter portion 42fb is preferably 1 mm or more, is more preferably 2 mm or more, and is even more preferably 3 mm or more. Note that the outer diameter of the small diameter portion 42fb is preferably equal to or more than 1/5 of the outer diameter of the large diameter portion 42fa. Thus, the reliability of the fastening portion 43 is further increased.

The fastening portion 43 is arranged in a position that is distant from an end portion C1 of the contact portion C. In this embodiment, the end portion C1 of the contact portion C is a position where the opening 41R3 of a second recessed portion 41r of the first conductive member 41 is formed. The end portion C1 is a portion that is exposed from a contact surface between the first conductive member 41 and the second conductive member 42. From a viewpoint of suppressing corrosion by an electrolyte solution, water, or the like, the fastening portion 43 is preferably arranged in a position distant from the end portion C1 of the contact portion C. For example, a shortest creeping surface distance between the fastening portion 43 and the end portion C1 of the contact portion C is preferably 1 mm or more, is more preferably 2 mm or more, and is even more preferably 3 mm or more. As used herein, the term "creeping surface distance" refers to a distance along the contact portion C. In this embodiment, the creeping surface distance is a distance from the opening 41R3 of the second recessed portion 41r of the first conductive member 41 to a base end of the small diameter portion 42fb of the second conductive member 42 and is a distance along the inner peripheral side surface of the first conductive member 41 or the outer peripheral side surface of the second conductive member 42.

In the embodiment described above, the contact portion C is also formed on the outer peripheral side surface of the large diameter portion 42fa of the flange portion 42f. Thus, the shortest creeping surface distance between the fastening portion 43 and the end portion C1 of the contact portion C is increased by an amount corresponding to a length of the contact portion C on the outer peripheral side surface of the large diameter portion 42fa. Accordingly, the fastening portion 43 is less likely to be corroded by the electrolyte solution, water, or the like.

Note that, in a form in which the inner peripheral side surface of the first recessed portion 41R is arranged outside the outer peripheral side surface of the large diameter portion 42fa in the radial direction, a gap may be provided between the outer peripheral side surface of the large diameter portion 42fa and the inner peripheral side surface of the first recessed portion 41R. According to the configuration described above, a more stable fastening portion 43 can be formed. Although not particularly limited, for example, the gap between the outer peripheral side surface of the large diameter portion 42fa and the inner peripheral side surface of the first recessed portion 41R may be 1 mm or less and may be 0.5 mm or less.

Various other coupling structures than the fastening portion 43 and the metal joining portion 45 described above may be provided in the first conductive member 41 and the second conductive member 42.

In this embodiment, a groove 42fc is provided in an outer peripheral side surface of the flange portion 42f. The groove 42fc is a portion of the flange portion 42f that is constricted, and is also referred to as a "narrow portion." A portion of the first conductive member 41 is arranged in the groove 42fc. According to the configuration described above, the first conductive member 41 and the second conductive member 42 can be more firmly fastened to each other and the reliability of the negative electrode terminal 40 can be increased. The groove 42fc is formed in a boundary portion between the large diameter portion 42fa and the small diameter portion 42fb. The groove 42fc may be continuously formed in a circumferential direction of the flange portion 42f, may be intermittently formed, and may be partially formed. The groove 42fc is preferably formed continuously in an annular shape in the circumferential direction of the flange portion 42f. In this embodiment, the groove 42fc is continuous in the circumferential direction, and an outer peripheral edge of a narrowest portion (constricted portion) of the groove 42fc has a circular shape. A length of the groove 42fc relative to a peripheral length is preferably 0.5 or more, is more preferably 0.7 or more, and is even more preferably 0.9 or more. Herein, the peripheral length refers to a peripheral length of a portion of the side peripheral surface of the flange portion 42f in which the groove 42fc is formed.

In this embodiment, the protrusion 42p is provided in the second conductive member 42. The protrusion 42p is provided closer to the outer periphery than metal joining portion 45. The protrusion 42p is provided in the contact portion C of the first conductive member 41 and the second conductive member 42. The protrusion 42p is formed on the upper surface 42u of the large diameter portion 42fa in the upper surface of the flange portion 42f. The protrusion 42p is provided in a position distant from the end portion C1 of the contact portion C in the second conductive member 42. The shortest creeping surface distance between the protrusion 42p and the end portion C1 of the contact portion C is preferably 1 mm or more, is more preferably 2 mm or more, and is even more preferably 3 mm or more. The protrusion 42p is provided on an inner peripheral side from a position located at a distance corresponding to preferably 0.9 times, more preferably 0.8 times, and even more preferably 0.6 times a radius of the flange portion 42f from the central axis CL.

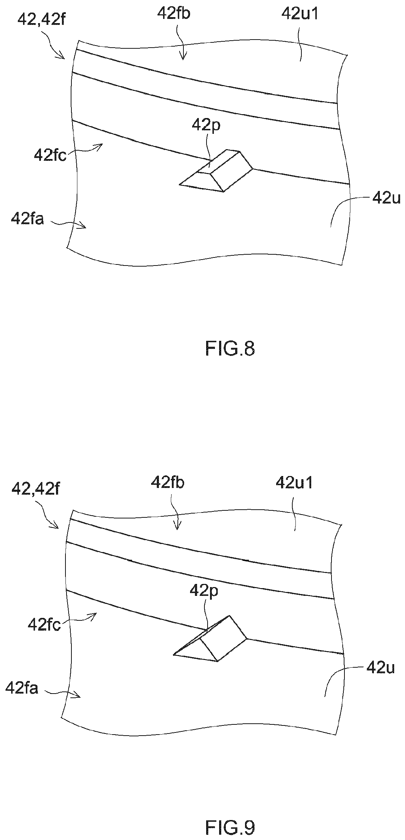

FIG. 7 is a perspective view of the second conductive member 42. FIG. 8 is a schematic view of the protrusion 42p. FIG. 9 is a schematic view of the protrusion 42p according to another embodiment. As illustrated in FIG. 7, the protrusion 42p is provided near the small diameter portion 42fb on the upper surface 42u of the large diameter portion 42fa. The protrusion 42p may be connected to the small diameter portion 42fb, and may be distant from the small diameter portion 42fb. In this embodiment, the protrusion 42p is provided to be connected to the small diameter portion 42fb and extend from the base end of the small diameter portion 42fb in the radial direction.

The protrusion 42p is preferably provided near a root (starting end) of the small diameter portion 42fb on the upper surface 42u of the large diameter portion 42fa. Thus, a probability that the interface between the protrusion 42p and the second recessed portion 41r is corroded by the electrolyte, water, or the like can be reduced. For example, the protrusion 42p is provided in a position at a distance of, preferably, 5 mm or less, more preferably 3 mm or less, and even more preferably 1 mm or less from the root of the small diameter portion 42fb.

As illustrated in FIG. 8, the protrusion 42p has a distal end having a flat shape. The protrusion 42p has an approximately trapezoidal cross section in a length direction (radial direction of the flange portion 42f). A shape of the protrusion 42p is not limited thereto and, as illustrated in FIG. 9, may have a shape with a sharp distal end. The protrusion 42p may have an approximately triangular cross section in the length direction. There is no particular limitation on dimension and shape of the protrusion 42p. In terms of durability of the protrusion 42p, an aspect ratio A/B expressed by a height B of the protrusion 42p with respect to a width A of a base end of the protrusion 42p is preferably 1 or more.

As illustrated in FIG. 7 and FIG. 8, the protrusion 42p is formed to extend in the radial direction. There is no particular limitation on a length of the protrusion 42p in the radial direction. For example, the length of the protrusion 42p in the radial direction is preferably 0.25 mm or more, and is more preferably 0.5 mm or more. Moreover, the length of the protrusion 42p in the radial direction is preferably 5 mm or less, and is more preferably 3 mm or less.

As illustrated in FIG. 5, six protrusions 42p are provided on the upper surface 42u of the large diameter portion 42fa of the flange portion 42f. The six protrusions 42p are provided at an approximately same distance from the central portion in the radial direction. As for intervals between the protrusions 42p, for example, the protrusions 42p can be provided at approximately same intervals in a circumferential direction. Note that there is no particular limitation on number, arrangement, interval, or the like of the protrusions 42p. The number of the protrusions 42p may be one. From a viewpoint of increasing conductivity of the first conductive member 41 and the second conductive member 42, the number of the protrusions 42p is preferably plural, and is more preferably four or more. In terms of productivity, for example, the number of the protrusions 42p may be 20 or less, may be 12 or less, and may be eight or less.

As illustrated in FIG. 6, the protrusion 42p of the second conductive member 42 bites in the first conductive member 41. In other words, the first conductive member 41 includes the second recessed portion 41r that is fitted to the protrusion 42p of the second conductive member 42. The first conductive member 41 includes the same number of second recessed portions 41r as that of the protrusions 42p of the second conductive member 42. Each of the second recessed portions 41r is formed in a shape corresponding to a corresponding one of the protrusions 42p at the same position as that of the corresponding one of the protrusions 42p. As described above, the protrusions 42p of the second conductive member 42 and the second recessed portions 41r of the first conductive member 41 are fitted to each other at the interface between the first conductive member 41 and the second conductive member 42. According to the configuration described above, the first conductive member 41 and the second conductive member 42 can be more firmly fastened to each other. Also, even when a force is applied in the circumferential direction about the central axis CL of the negative electrode terminal 40 by the external coupling member, such as the bus bar 90 or the like (see FIG. 4), a load is less likely to be applied in a direction in which the first conductive member 41 is rotated with respect to the second conductive member 42. Thus, in the negative electrode terminal 40, the metal joining portion 45 can be easily maintained and good conduction reliability between the first conductive member 41 and the second conductive member 42 can be achieved. In view of the foregoing, as for the second recessed portion 41r and the protrusion 42p, it is preferable that multiple second recessed portions 41r and multiple protrusions 42p are provided.

Note that metal joining may be formed at an interface between the second recessed portion 41r of the first conductive member 41 and the protrusion 42p of the second conductive member 42. Thus, conductivity between the first conductive member 41 and the second conductive member 42 can be increased.

In the embodiment described above, the second conductive member 42 includes the protrusion 42p. The first conductive member 41 includes the second recessed portion 41r to which the protrusion 42p is fitted. However, the configuration of the first conductive member 41 and the second conductive member 42 is not limited thereto. A protrusion may be provided in at least one of the first conductive member and the second conductive member, and a second recessed portion may be provided in the other one of the first conductive member and the second conductive member. For example, the first conductive member may include the protrusion, and the second conductive member may include the second recessed portion that is fitted to the protrusion. Each of the first conductive member and the second conductive member may include a protrusion. In this case, each of the first conductive member and the second conductive member may include a second recessed portion fitted to the protrusion of the other one of the first conductive member and the second conductive member.

However, from a viewpoint of fitting the protrusion provided on one of the conductive members to the other one of the conductive members, the protrusion is preferably provided on one of the first conductive member 41 and the second conductive member 42 having a higher Vickers' hardness than that of the other one of the first conductive member 41 and the second conductive member 42. In view of the foregoing, the second conductive member 42 preferably includes at least the protrusion 42p.

There is no particular limitation on a form of the fastening portion 43 as long as the fastening portion 43 is mechanically fastened, for example, by mechanical energy. The fastening portion 43 can be a portion fastened, for example, by press fitting, shrink fitting, caulking, riveting, folding, bolt joining, or the like.

### <Method for Manufacturing Negative Electrode Terminal 40>

The negative electrode terminal 40 described above can be manufactured, for example, by a method for manufacturing a terminal (in this embodiment, the negative electrode terminal 40) for an electricity storage device that will be described below. A method for manufacturing a terminal for an electricity storage device includes a preparation step of preparing the first conductive member 41 and the second conductive member 42, a fastening step of fastening the first conductive member 41 and the second conductive member 42, and a metal joining step of metallically joining the first conductive member 41 and the second conductive member 42. The method for manufacturing a terminal for an electricity storage device may include some other step.

In the preparation step, the first conductive member 41 and the second conductive member 42 are prepared. As the second conductive member 42, the second metal having the shape described above is prepared. In this embodiment, as the first conductive member 41, a metal having a lower hardness than that of the second conductive member 42 is used. As the first conductive member 41, the metal formed in a shape that is deformed along the large diameter portion 42fa, the small diameter portion 42fb, and the groove 42fc of the second conductive member 42 when being caulked in the fastening step is prepared.

In the fastening step, the first conductive member 41 and the second conductive member 42 are mechanically fastened to each other. In this embodiment, the first conductive member 41 and the second conductive member 42 are mechanically fastened to each other by caulking the first conductive member 41 to the second conductive member 42.

In the fastening step, first, the first conductive member 41 is arranged in a mold (not illustrated). In this embodiment, the second conductive member 42 is pressed against the first conductive member 41 such that the flange portion 42f of the second conductive member 42 is inserted in the first recessed portion 41R of the first conductive member 41. At this time, a known press device (not illustrated) or the like can be used. Since the first conductive member 41 has a lower hardness than that of the second conductive member 42, the first conductive member 41 is crushed and is plastically deformed along the second conductive member 42. An edge of the first recessed portion 41R of the first conductive member 41 is press-fit to the groove 42fc of the second conductive member 42, so that the first conductive member 41 and the second conductive member 42 are fastened to each other. In the fastening step, as described above, various fastening methods in which the first conductive member 41 and the second conductive member 42 are metallically fastened to each other may be employed.

A gap may be provided between the outer peripheral side surface of the large diameter portion 42fa and the inner peripheral side surface of the first recessed portion 41R. According to the configuration described above, insertion of the large diameter portion 42fa in the first recessed portion 41R can be facilitated and formation of a stable fastening portion 43 can be facilitated.

The protrusion 42p is provided in the second conductive member 42. In the fastening step, the protrusion 42p may bite in the first conductive member 41 and the second recessed portion 41r may be formed in the first conductive member 41 when the second conductive member 42 is pressed against the first conductive member 41.

When the first conductive member 41 and the second conductive member 42 are fastened to each other and the fastening portion 43 is formed, the first conductive member 41 and the second conductive member 42 are metallically joined to each other next.

In the metal joining step, the metal joining portion 45 is formed at the interface between the first conductive member 41 and the second conductive member 42. In this embodiment, the first conductive member 41 and the second conductive member 42 are metallically joined to each other by the ultrasonic joining portion. Although not illustrated in detail, in the metal joining step, the first conductive member 41 and the second conductive member 42 fastened to each other are sandwiched between a horn and an anvil and ultrasonic vibration is given to the joining interface via the horn. For example, the anvil may be inserted in a cylindrical portion of the shaft portion 42s of the second conductive member 42 and ultrasonic vibration may be given to the first conductive member 41 while the horn is pressed to an approximately central portion of the second surface 41b of the first conductive member 41. As a result, the metal joining portion 45 is formed in an approximately central portion of an interface between the first bottom surface 41R1 of the first recessed portion 41R of the first conductive member 41 and the upper surface 42u1 of the small diameter portion 42fb of the second conductive member 42. In pressing the horn against the first conductive member 41, the first conductive member 41 is pressed against the second conductive member 42. By this pressing, the protrusion 42p may bite in the first conductive member 41 and the second recessed portion 41r may be formed in the first conductive member 41.

In the metal joining step, ultrasonic vibration is given to the first conductive member 41, so that the first conductive member 41 can vibrate also at a contact interface between the second recessed portion 41r of the first conductive member 41 and the protrusion 42p of the second conductive member 42. Thus, the metal joining portion can be formed at the contact interface between the second recessed portion 41r and the protrusion 42p. From a viewpoint of facilitating formation of metal joining, a shape that is tapered toward a distal end of the protrusion (a shape in which an area of the distal end is small) is preferable.

The closer from where the horn is pressed a position is, the more likely to be transmitted the ultrasonic vibration given by the horn becomes in the position. Therefore, when respective positions of the protrusion 42p and the second recessed portion 41r are closer to where the horn is pressed (in this embodiment, the approximately central portion of the second surface 41b of the first conductive member 41) becomes smaller, a preferable metal joining portion is more likely to be formed at an interface between the protrusion 42p and the second recessed portion 41r.

In the embodiment described above, the protrusion 42p is provided in the second conductive member 42 prepared in the preparation step in advance. However, formation of the protrusion is not limited thereto, and the protrusion may be provided in the first conductive member prepared in the preparation step in advance. Moreover, in the preparation step, the first recessed portion may be provided in at least one of the first conductive member and the second conductive member in advance. In the fastening step, the protrusion extending along the first recessed portion of one of the first conductive member and the second conductive member may be formed in the other one of the first conductive member and the second conductive member. However, from a viewpoint of firmly fastening the protrusion 42p and the second recessed portion 41r to each other, a protrusion is preferably provided in a position where a second metal joining portion is formed in advance.

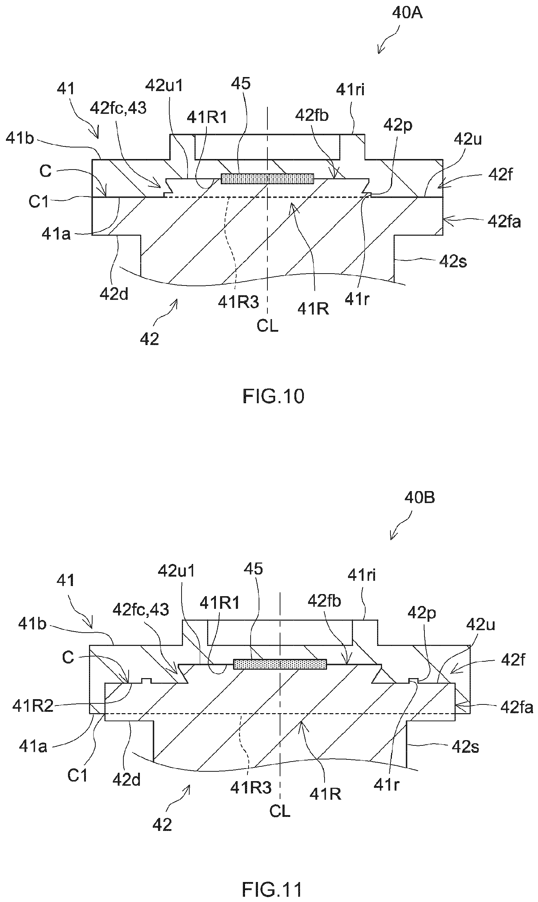

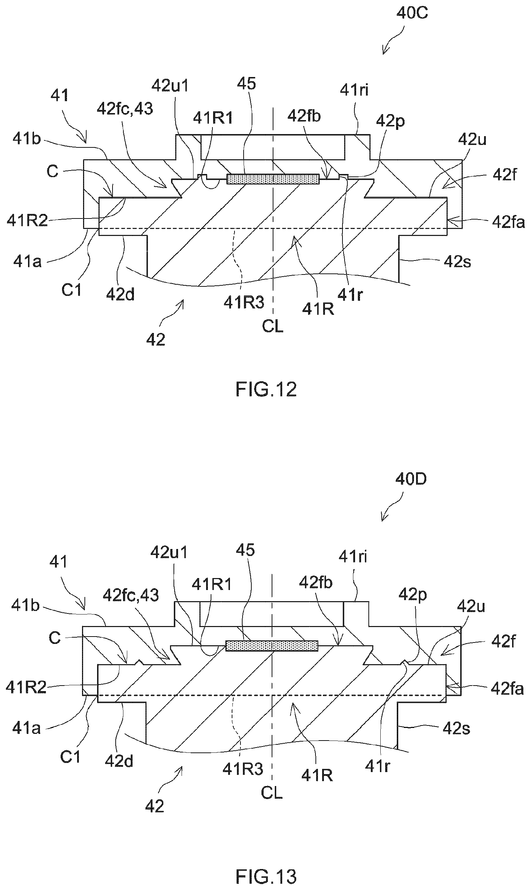

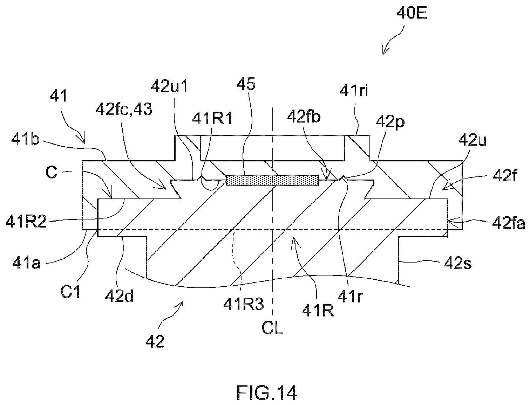

The configuration of the negative electrode terminal 40 is not limited to the embodiment described above. FIG. 10 is a cross-sectional view of a negative electrode terminal 40A according to another embodiment. FIG. 11 is a cross-sectional view of a negative electrode terminal 40B according to another embodiment. FIG. 12 is a cross-sectional view of a negative electrode terminal 40C according to another embodiment. FIG. 13 is a cross-sectional view of a negative electrode terminal 40D according to another embodiment. FIG. 14 is a cross-sectional view of a negative electrode terminal 40E according to another embodiment. In FIG. 10 to FIG. 14, each component that is in common with the negative electrode terminal 40 described above is denoted by the same reference sign and detailed description thereof will be omitted.

In the negative electrode terminal 40A illustrated in FIG. 10, the first recessed portion 41R of the first conductive member 41 is set to have a shape and a dimension in which only the small diameter portion 42fb of the flange portion 42f of the second conductive member 42 is arranged therein. In the first recessed portion 41R configured as described above, the second bottom surface 41R2 (see FIG. 6) is not formed. A shape of the first recessed portion 41R corresponds to a shape of the small diameter portion 42fb. In this embodiment, the upper surface of the large diameter portion 42fa of the flange portion 42f contacts the first surface 41a of the first conductive member 41. There is not particular limitation on a dimensional relation between the large diameter portion 42fa of the second conductive member 42 and the first conductive member 41 in the radial direction of the flange portion 42f. In this embodiment, respective dimensions of the large diameter portion 42fa of the second conductive member 42 and the first conductive member 41 are set to be the approximately same. Thus, a size of the small diameter portion 42fb can be increased and a depth of the first recessed portion 41R can be increased while an outer diameter of the negative electrode terminal 40A is maintained. Accordingly, joining strength in the fastening portion 43 can be increased. A ratio at which the second conductive member 42 occupies in the negative electrode terminal 40A increases, so that conductivity of the first conductive member 41 and the second conductive member 42 can be increased. As a result, heat generation during conduction is suppressed, and durability of the electricity storage device 100 can be increased.

In the negative electrode terminal 40B illustrated in FIG. 11, the protrusion 42p is provided on the upper surface 42u of the large diameter portion 42fa of the flange portion 42f. The protrusion 42p is provided in an approximately central portion between a peripheral edge portion of the large diameter portion 42fa and the base end of the small diameter portion 42fb. As described above, the protrusion 42p may not be necessarily provided near the root of the small diameter portion 42fb. With the protrusion 42p provided in a position distant from the root of the small diameter portion 42fb, durability to a load applied in a direction in which the first conductive member 41 is rotated with respect to the second conductive member 42 can be increased.

In the negative electrode terminal 40C illustrated in FIG. 12, the protrusion 42p is provided in the upper surface 42u1 of the small diameter portion 42fb of the flange portion 42f. According to the configuration described above, an interface between the protrusion 42p and the second recessed portion 41r is located distant from the end portion C1 of the contact portion C. As a result, corrosion of the interface between the protrusion 42p and the second recessed portion 41r by the electrolyte solution, water, or the like can be reduced.

In each of the negative electrode terminal 40D illustrated in FIG. 13 and the negative electrode terminal 40E illustrated in FIG. 14, in the circumferential direction of the flange portion 42f, a cross section of the protrusion 42p has an approximately triangular shape. In the cross section of the flange portion 42f in the circumferential direction, a distal end of the protrusion 42p has a shape with a sharp distal end, so that ultrasonic vibration is likely to be given in a state where the first conductive member 41 and the second conductive member 42 contact each other at the interface between the first conductive member 41 and the second conductive member 42. As a result, metal joining can be easily formed at the interface between the protrusion 42p and the second recessed portion 41r.

The technology disclosed herein has been described above in various forms. However, the embodiments described above shall not limit the present disclosure, unless specifically stated otherwise. Various changes can be made to the technology described herein, and each of components and processes described herein can be omitted as appropriate or can be combined with another one or other ones of the components and the processes as appropriate, unless a particular problem occurs. The present specification includes disclosure set force in the following items.

First item: A terminal for an electricity storage device, the terminal including a first conductive member formed of a first metal, and a second conductive member formed of a second metal that is different from the first metal, in which the first conductive member includes a first recessed portion in a first surface, the second conductive member includes a flange portion and a shaft portion provided in one surface of the flange portion, at least a portion of the flange portion is arranged in the first recessed portion, the first conductive member includes a metal joining portion metallically joined to the flange portion, the flange portion includes a large diameter portion and a small diameter portion, an outer diameter of the small diameter portion is equal to or less than 9/10 of an outer diameter of the large diameter portion, the small diameter portion is located at a side more distant from the shaft portion than the large diameter portion, an outer peripheral side surface of the small diameter portion includes a fastening portion mechanically fastened to an inner surface of the first recessed portion, and an upper surface of the large diameter portion contacts the first conductive member.

Second item: The terminal for an electricity storage device according to the first item, in which a groove is provided in the outer peripheral side surface of the small diameter portion and a portion of the first conductive member is arranged in the groove.

Third item: The terminal for an electricity storage device according to the first or second item, the terminal further including a contact portion that the first conductive member and the second conductive member contact, in which the fastening portion is arranged in a position distant from an end portion of the contact portion.

Fourth item: The terminal for an electricity storage device according to the third item, in which one of a protrusion and a second recessed portion is provided in a position distant from the end portion of the contact portion in the second conductive member, and the first conductive member includes the other one of the protrusion and the second recessed portion that is fitted to the one of the protrusion and the second recessed portion.

Fifth item: The terminal for an electricity storage device according to the fourth item, in which the second conductive member includes one of the protrusion and the second recessed portion in a portion located on an upper surface of the large diameter portion and near a root of the small diameter portion.

Sixth item: The terminal for an electricity storage device according to any one of the third to fifth items, in which the contact portion is formed also on an outer peripheral side surface of the large diameter portion of the flange portion

Seventh item: An electricity storage device including an electrode body including a positive electrode and a negative electrode, a case that accommodates the electrode body, and a terminal electrically coupled to the positive electrode or the negative electrode and mounted on the case, in which the terminal is a terminal for an electricity storage device, the terminal including a first conductive member formed of a first metal, and a second conductive member formed of a second metal that is different from the first metal, the first conductive member includes a first recessed portion in a first surface, the second conductive member includes a flange portion and a shaft portion provided in one surface of the flange portion, at least a portion of the flange portion is arranged in the first recessed portion, the first conductive member includes a metal joining portion metallically joined to the flange portion, the flange portion includes a large diameter portion and a small diameter portion, an outer diameter of the small diameter portion is equal to or less than 9/10 of an outer diameter of the large diameter portion, the small diameter portion is located at a side more distant from the shaft portion than the large diameter portion, an outer peripheral side surface of the small diameter portion includes a fastening portion mechanically fastened to an inner surface of the first recessed portion, and an upper surface of the large diameter portion contacts the first conductive member.

## Claims

1. A terminal (40) for an electricity storage device, the terminal (40) comprising:
a first conductive member (41) formed of a first metal; and
a second conductive member (42) formed of a second metal that is different from the first metal,
wherein
the first conductive member (41) includes a first recessed portion (41R) in a first surface (41a),
the second conductive member (42) includes a flange portion (42f) and a shaft portion (42s) provided in one surface (42d) of the flange portion (42f),
at least a portion of the flange portion (42f) is arranged in the first recessed portion (41R),
the first conductive member (41) includes a metal joining portion (45) metallically joined to the flange portion (42f),
the flange portion (42f) includes a large diameter portion (42fa) and a small diameter portion (42fb),
an outer diameter of the small diameter portion (42fb) is equal to or less than 9/10 of an outer diameter of the large diameter portion (42fa),
the small diameter portion (42fb) is located at a side more distant from the shaft portion (42s) than the large diameter portion (42fa),
an outer peripheral side surface of the small diameter portion (42fb) includes a fastening portion (43) mechanically fastened to an inner surface of the first recessed portion (41R), and
an upper surface of the large diameter portion (42fa) contacts the first conductive member (41).

2. The terminal (40) for an electricity storage device according to claim 1, wherein a groove (42fc) is provided in the outer peripheral side surface of the small diameter portion (42fb) and a portion of the first conductive member (41) is arranged in the groove (42fc).

3. The terminal (40) for an electricity storage device according to claim 1 or 2, further comprising:
a contact portion (C) that the first conductive member (41) and the second conductive member (42) contact,
wherein
the fastening portion (43) is arranged in a position distant from an end portion (C1) of the contact portion (C).

4. The terminal (40) for an electricity storage device according to claim 3, wherein
one of a protrusion (42p) and a second recessed portion (41r) is provided in a position distant from the end portion (C1) of the contact portion (C) in the second conductive member (42), and
the first conductive member (41) includes the other one of the protrusion (42p) and the second recessed portion (41r) that is fitted to the one of the protrusion (42p) and the second recessed portion (41r).

5. The terminal (40) for an electricity storage device according to claim 4, wherein
the second conductive member (42) includes one of the protrusion (42p) and the second recessed portion (41r) in a portion located on an upper surface of the large diameter portion (42fa) and near a root of the small diameter portion (42fb).

6. The terminal (40) for an electricity storage device according to claim 3, wherein
the contact portion (C) is formed also on an outer peripheral side surface of the large diameter portion (42fa) of the flange portion (42f).

7. An electricity storage device (100) comprising:
an electrode body (10) including a positive electrode and a negative electrode;
a case (20) that accommodates the electrode body (10); and
a terminal (40) electrically coupled to the positive electrode or the negative electrode and mounted on the case (20),
wherein
the terminal (40) is a terminal for an electricity storage device, the terminal (40) including
a first conductive member (41) formed of a first metal, and
a second conductive member (42) formed of a second metal that is different from the first metal,
the first conductive member (41) includes a first recessed portion (41R) in a first surface (41a),
the second conductive member (42) includes a flange portion (42f) and a shaft portion (42s) provided in one surface (42d) of the flange portion (42f),
at least a portion of the flange portion (42f) is arranged in the first recessed portion (41R),
the first conductive member (41) includes a metal joining portion (45) metallically joined to the flange portion (42f),
the flange portion (42f) includes a large diameter portion (42fa) and a small diameter portion (42fb),
an outer diameter of the small diameter portion (42fb) is equal to or less than 9/10 of an outer diameter of the large diameter portion (42fa),
the small diameter portion (42fb) is located at a side more distant from the shaft portion (42s) than the large diameter portion (42fa),
an outer peripheral side surface of the small diameter portion (42fb) includes a fastening portion (43) mechanically fastened to an inner surface of the first recessed portion (41R), and
an upper surface of the large diameter portion (42fa) contacts the first conductive member (41).
